# EUROPEAN PATENT APPLICATION

(11) **EP 4 811 619 A1**
(43) Date of publication of application: **23.09.2026**
(21) Application number: 26165820.7
(22) Date of filing: 18.03.2026
(51) Int. Cl.: H02K 5/14, H02K 13/10, H02K 11/20, H02K 11/25, H01R 39/58

(54) **BRUSH HOLDER AND BRUSH HOLDER RIGGING INCLUDING SAME**

(30) Priority: 21.03.2025 KR 20250036816
(71) Applicant: Doosan Enerbility Co., Ltd., Seongsan-gu Changwon-si, Gyeongsangnam-do 51711 (KR)
(72) Inventor: KIM, Sungjong, 51015 Gimhae-si (KR); HEO, Myounggoo, 51426 Changwon-si, (KR)
(74) Representative: Ter Meer Steinmeister & Partner

(57) **Abstract**

Proposed are a brush holder and a brush holder rigging including the brush holder. More particularly, proposed are a brush holder capable of measuring a vibration transferred from a brush and a wear amount of the brush, and a brush holder rigging including the brush holder. In the brush holder, a sensor block may be disposed between a body and the brush and a vibration sensor and a distance sensor may be installed in the sensor block. In addition, the controller may calculate the wear amount of the brush on the basis of the measurement value of the distance sensor.

## Description

### BACKGROUND OF THE INVENTION

### 1. Field of the Invention

The present disclosure relates to a brush holder and a brush holder rigging including the brush holder. More particularly, the present disclosure relates to a brush holder capable of measuring the vibration transferred from a brush and a wear amount of the brush, and a brush holder rigging including the brush holder.

### 2. Description of the Background Art

A brush holder rigging (BHR) (also referred to as a generator excitation current supply apparatus) is an apparatus for supplying current from an external exciter to a collector ring of a generator.

The current supplied from the exciter may be sequentially transferred to a busbar and a brush holder. In addition, the current may be transferred from the brush to the collector ring through friction between the brush and the collector ring.

During rotation of a rotor, vibration may be transmitted to the brush. If such vibration increases beyond an acceptable level, uneven wear or damage of the brush may occur. In addition, an increase in vibration may degrade contact condition between the brush and a collector ring, resulting in a reduction in current flow.

In addition, the brush may be worn and thereby shortened in length due to continuous friction caused by rotation of the rotor, which may generate increased frictional heat. A shortened or damaged brush may fail to properly perform current transferring, which leads to an increase in the current flowing through other brushes.

If such a situation is repeated and continues over time, the amount of current flowing through the brush may gradually increase, leading to a rise in temperature that may result in a major accident such as a fire. Therefore, the condition of the brush should be monitored by measuring the vibration transmitted to the brush and the wear amount of the brush.

However, since the current flowing through the brush is considerably large, there is a significant risk of electric shock if the operator directly contacts a measurement device to measure the vibration and the wear amount. In addition, the brush holder rigging has limited internal space, resulting in spatial constraint that make it difficult to additionally install a separate device for measuring the vibration and the wear amount.

The foregoing is intended merely to aid in the understanding of the background of the present disclosure, and is not intended to mean that the present disclosure falls within the purview of the related art that is already known to those skilled in the art.

### SUMMARY OF THE INVENTION

The present disclosure is directed to providing a brush holder capable of measuring the vibration transferred from a brush and a wear amount of the brush, and a brush holder rigging including the brush holder.

According to an embodiment of the present disclosure, there is provided a brush holder including a body, a guide pin, a sensor block, and a vibration sensor. At a lower side of the body, a brush may be mounted. An upper portion of the guide pin may be installed at the body, and a lower portion of the guide pin may be operable to be inserted into a brush. The sensor block may be penetrated by the guide pin and disposed between the body and the brush. The vibration sensor may be installed in the sensor block to measure a vibration transferred from a brush.

According to an embodiment of the present disclosure, the brush holder may further include a distance sensor. The distance sensor may be installed in the sensor block to measure a distance between the sensor block and the body.

According to an embodiment of the present disclosure, the brush holder may further include a controller. The controller may calculate a wear amount of the brush based on a measurement value of the distance sensor.

According to an embodiment of the present disclosure, the controller may be configured to transmit, to a manager's terminal, at least one selected from a group of a measurement value of the vibration sensor, the measurement value of the distance sensor, and the wear amount.

According to an embodiment of the present disclosure, an opening hole may be formed in an upper surface of the sensor block, and the distance sensor may be installed at an inner upper portion of the sensor block and may be disposed in the opening hole.

According to an embodiment of the present disclosure, the vibration sensor may be installed at an inner lower portion of the sensor block.

According to an embodiment of the present disclosure, a block wiring hole may be formed in an upper portion of the sensor block and a sensor wire connected to the distance sensor or the vibration sensor may pass through the block wiring hole.

According to an embodiment of the present disclosure, a pin through-hole may be formed in vertical direction in the sensor block and the sensor block may be penetrated by the guide pin.

According to an embodiment of the present disclosure, the brush holder may further include a partition plate and a roll spring. The partition plate may be installed at the body and configured to be disposed at a side surface of the brush. The roll spring may be installed between the partition plate and the sensor block to lower the sensor block.

According to an embodiment of the present disclosure, the brush holder may further include a wiring duct. The wiring duct may be coupled to an upper portion of the partition plate and the sensor wire may pass through the wiring duct.

According to an embodiment of the present disclosure, a spring insertion hole may be formed in a side surface of the sensor block and an upper portion of the roll spring may be inserted into the spring insertion hole.

According to an embodiment of the present disclosure, a spring mounting groove may be formed in an inner lower portion of the sensor block and an upper portion of the roll spring may be deposited in the spring mounting groove.

According to an embodiment, the sensor block may include two chambers, which are an upper chamber and a lower chamber. The distance sensor may be disposed in the upper chamber and the vibration sensor may be disposed in the lower chamber. The upper portion of the roll spring may be a rolled portion of the roll spring and may be disposed between the upper chamber and the lower chamber. The spring mounting groove may be formed in an upper surface of the lower chamber.

According to an embodiment of the present disclosure, a connection protrusion may be formed at a lower surface of the sensor block. The connection protrusion may be configured to be inserted into a support groove formed in an upper surface of the brush.

According to an embodiment of the present disclosure, the brush holder may further include a controller housing and a printed circuit board. The controller housing may be installed at an upper portion of the body. The printed circuit board may be disposed inside the controller housing, and the controller may be mounted on the printed circuit board. The printed circuit board may be connected to the sensor wire.

According to an embodiment of the present disclosure, there is provided a brush holder rigging including a rotor, a collector ring, a busbar, a brush, and a brush holder. The collector ring may be penetrated by the rotor for power generation and fixed to the rotor. The busbar may be penetrated by the collector ring. The brush may be in contact with the collector ring. The brush may be installed at the brush holder and the brush holder may be coupled to the busbar.

In the brush holder and the brush holder rigging including the brush holder according to an embodiment of the present disclosure, the sensor block may be disposed between the body and the brush and the vibration sensor and the distance sensor may be installed in the sensor block. In addition, the controller can calculate the wear amount of the brush on the basis of the measurement value of the distance sensor.

Accordingly, the vibration and the wear amount can be measured without the manager directly touching the brush, thereby eliminating a possibility of an electric shock accident.

In addition, the controller may transmit the measurement values of the vibration sensor and the distance sensor and the wear amount to the manager's terminal so that the manager can monitor the state of the brush in real time. The manager can monitor the brush to selectively determine whether to replace the brush or whether to operate a generator.

In addition, the sensor block may be installed in the brush holder so that there is no need to secure a separate space in the brush holder rigging. Accordingly, it can be applied to a brush holder rigging designed in the related art, so that business scalability can be expected.

### BRIEF DESCRIPTION OF THE DRAWINGS

FIG. 1 is a side view of a brush holder rigging;
FIG. 2 is a cross-sectional view of the brush holder rigging;
FIG. 3 is a perspective view of a first side of a brush holder according to an embodiment of the present disclosure;
FIG. 4 is a perspective view of a second side of the brush holder;
FIG. 5 is a perspective view showing a state in which a body cover is separated from the brush holder;
FIG. 6 is a sectional view taken along line B-B shown in FIG. 3;
FIG. 7 is a perspective view showing a state in which a sensor block and the brush are lowered;
FIG. 8 is an enlarged view of portion B shown in FIG. 6;
FIGS. 9A and 9B are perspective views showing a first side surface and a second side surface of the sensor block;
FIG. 10 is a perspective view showing a first side of a plurality of sensor blocks and brushes;
FIG. 11 is a perspective view showing a second side of the plurality of sensor blocks and brushes;
FIGS. 12A to 12C are perspective views showing a first side surface, a rear surface, and a second side surface of a single sensor block and a single brush;
FIG. 13 is a perspective view showing a state in which a wiring duct is separated from a partition plate;
FIG. 14 is a perspective view of a body;
FIG. 15 is a perspective view showing a state in which a housing cover is separated from a sensor housing;
FIGS. 16A and 16B are perspective views showing a first embodiment of a sensor housing and a state in which a shielding plate is separated from the sensor housing;
FIGS. 17A and 17B are perspective views showing a second embodiment of a sensor housing and a state in which the housing cover is separated from the sensor housing;
FIG. 18 is a sectional view taken along line A-A shown in FIG. 3;
FIG. 19 is an enlarged view of portion A shown in FIG. 18;
FIG. 20 is a side view showing a state in which a brush is fixed to a hook member;
FIG. 21 is a side view showing a state in which the brush is separated from the hook member; and
FIGS. 22A and 22B are schematic cross-sectional views showing an elevating part in the brush holder according to a second embodiment of the present disclosure and a state in which a guide pin is raised.

### DETAILED DESCRIPTION OF THE INVENTION

The present disclosure may be modified in various ways and may have various embodiments, and specific embodiments will be illustrated and described in detail. However, the present disclosure is not limited thereto, and it should be understood that the exemplary embodiments include all modifications, equivalents, or substitutes in the idea and the technical scope of the present disclosure.

The terms used in the present disclosure are merely used to describe the specific embodiments, and are not intended to limit the present disclosure. As used herein, the singular forms "a", "an", and "the" are intended to include the plural forms as well, unless the context clearly indicates otherwise. In the present disclosure, it is to be understood that terms such as "including", "having", etc. are intended to indicate the existence of the features, numbers, steps, actions, elements, parts, or combinations thereof disclosed in the specification, and are not intended to preclude the possibility that one or more other features, numbers, steps, actions, elements, parts, or combinations thereof may exist or may be added.

Hereinafter, exemplary embodiments of the present disclosure will be described in detail with reference to the drawings. Herein, it is noted that the same reference numerals designate the same elements throughout the drawings. In addition, a detailed description of known functions and configurations that make the subject matter of the present disclosure unclear will be omitted. For the same reason, some elements may be exaggerated, omitted, or roughly illustrated in the accompanying drawings.

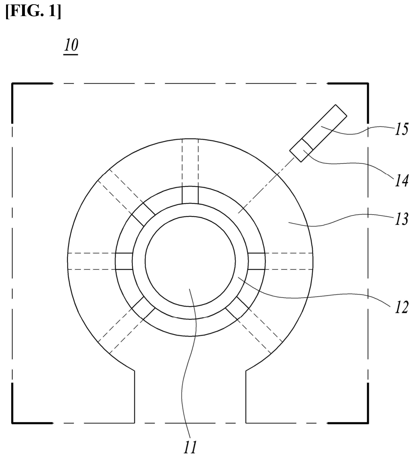

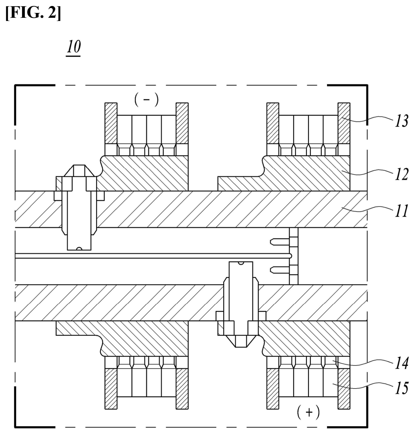

FIG. 1 is a side view of a brush holder rigging according to an embodiment of the present disclosure. FIG. 2 is a cross-sectional view of the brush holder rigging.

As shown in FIGS. 1 and 2, a brush holder rigging 10 may include a collector ring 12, a busbar 13, a brush 14, and a brush holder 15. The collector ring 12 may be penetrated by the rotor 11 and be fixed to the rotor 11.

The busbar 13 may be formed in a ring shape. The busbar 13 may be penetrated by the collector ring 12. The brush 14 may be made of a carbon material. The brush 14 may be in contact with an outer circumferential surface of the collector ring 12.

The brush holder 15 may have a plurality of brushes 14 arranged in a line and fixed thereto. In addition, a plurality of brush holders 15 may be provided and spaced apart from each other along a circumferential direction of the busbar 13 and may be coupled to or separated from the busbar 13.

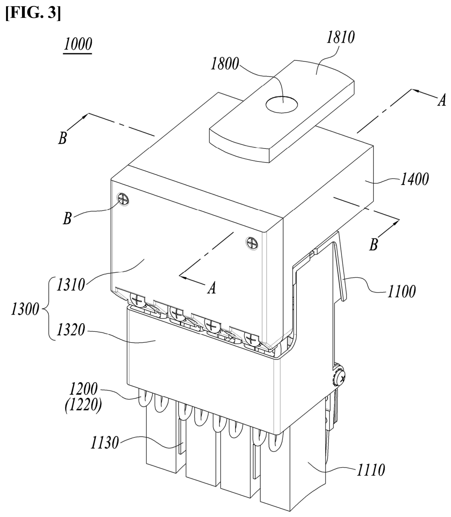

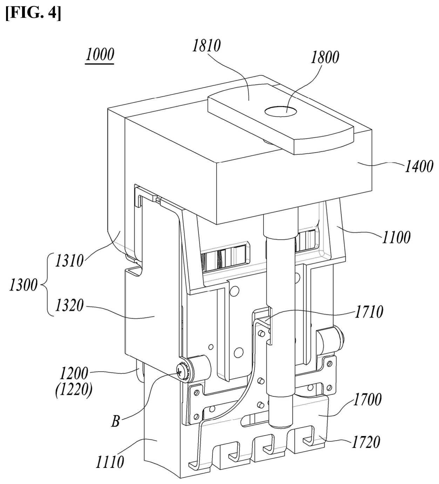

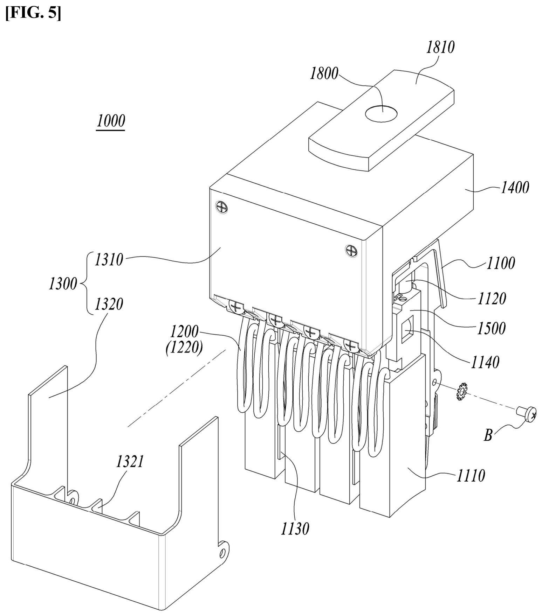

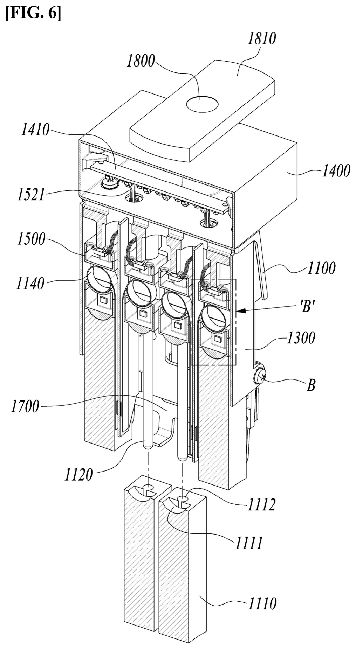

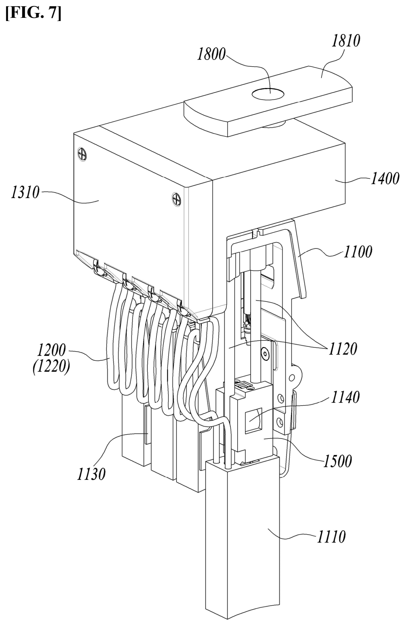

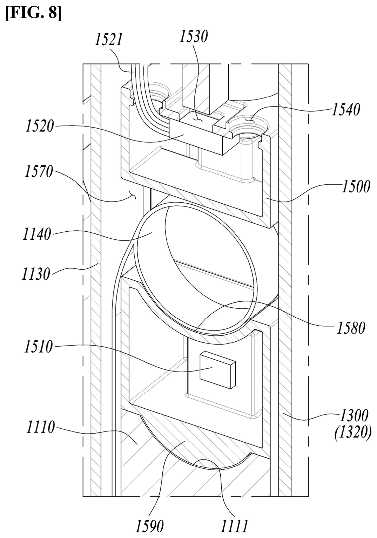

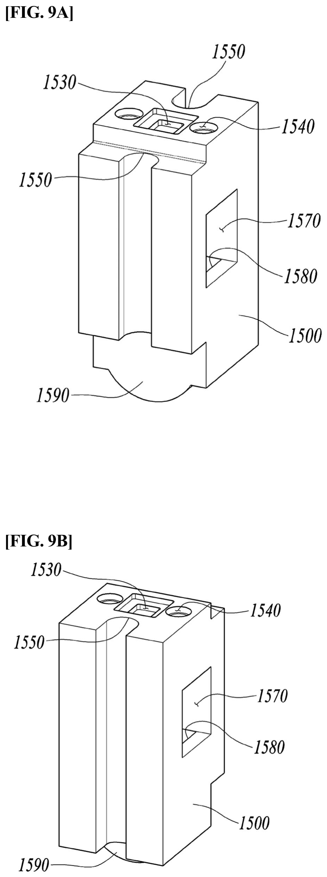

FIG. 3 is a perspective view of a first side of a brush holder according to an embodiment of the present disclosure. FIG. 4 is a perspective view of a second side of the brush holder. FIG. 5 is a perspective view showing a state in which a body cover is separated from the brush holder. FIG. 6 is a sectional view taken along line B-B shown in FIG. 3. FIG. 7 is a perspective view showing a state in which a sensor block and the brush are lowered. FIG. 8 is an enlarged view of portion B shown in FIG. 6. FIGS. 9A and 9B are perspective views showing a first side surface and a second side surface of the sensor block.

As shown in FIGS. 3 to 9B, the brush holder 1000 may be made of a known material, such as metal, through which current may flow. According to an embodiment, the brush holder 1000 may include a body 1100, a guide pin 1120, a sensor block 1500, a vibration sensor 1510, a distance sensor 1520, a partition plate 1130, a roll spring 1140, a controller, and a controller housing 1400.

The body 1100 may be coupled to the busbar 13 (shown in FIG. 2) such that current may be transmitted from the busbar 13 to the body 1100. The body 1100 may be formed in an upside-down L-shape. A plurality of brushes 1110 may be provided and arranged in a line at a lower side of the body 1100.

According to an embodiment, a horizontal cross-section of each of the plurality of brushes 1110 may have a rectangular shape. A shorter side of the rectangular horizontal cross-section of each brush 1110 may be defined as a width, and a direction parallel to the width may be defined as a width direction. A longer side of the rectangular horizontal cross-section of each brush 1110 may be defined as a breadth, and a direction parallel to the breadth may be defined as a breadth direction. According to an embodiment, the plurality of brushes 1110 may be arranged along the width direction.

A direction extending from the brushes 1110 toward the collector ring 12 and the rotor 11 may be defined as an upward-downward direction or a vertical direction.

The controller housing 1400 may have a hollow hexahedral shape. For example, the controller housing 1400 may have a rectangular parallelepiped shape. The controller housing 1400 may be fixed to an upper surface of the body 1100, and a printed circuit board 1410 may be fixed inside the controller housing 1400.

Fixing between the controller housing 1400 and the body 1100 may be achieved via a known fixing member such as a bolt or a screw or a welding method. Such a fixing method may be applied to fixing between all elements constituting the brush holder 1000, and a redundant description thereof will be omitted.

On the printed circuit board 1410, components related to the operation of the brush holder 1000, including a controller and a communication part, may be mounted.

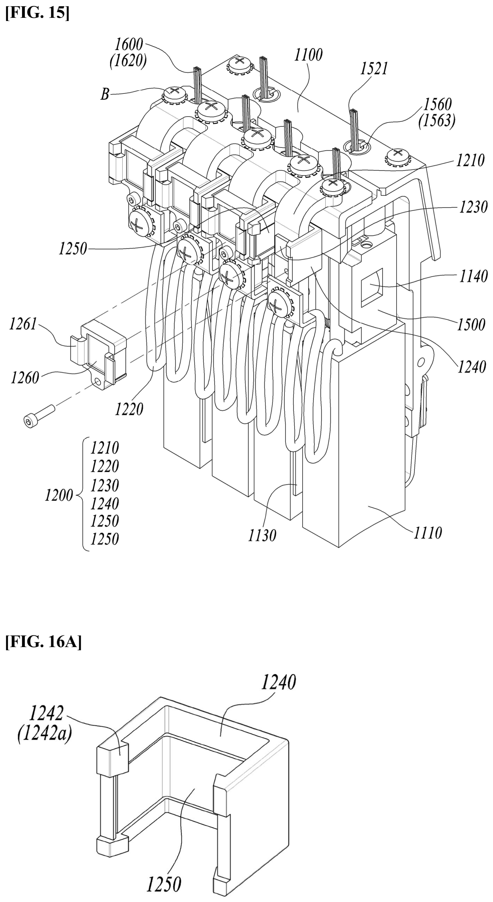

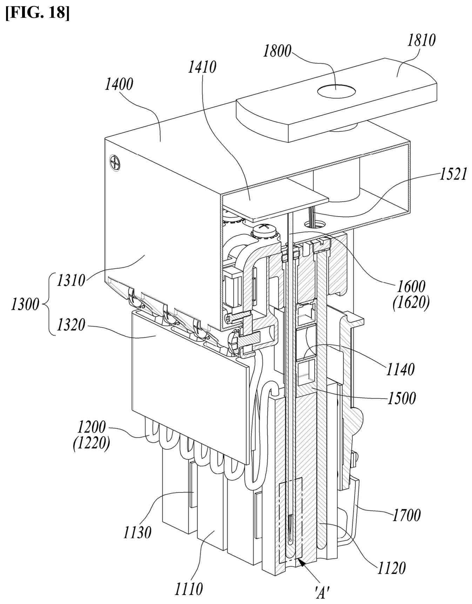

In addition, a first sensor wire 1521 and a second sensor wire 1620, which will be described later, may penetrate and pass through a lower surface of the controller housing 1400 and may be electrically connected to the printed circuit board 1410 (shown in FIG. 18). In addition, a magnetic field sensor 1230 (shown in FIG. 15) may be electrically connected to the printed circuit board 1410 via a wire.

The guide pin 1120 may fix the brush 1110 while allowing the brush to stably move in the upward-downward direction. An upper end of the guide pin 1120 may be fixed to the body 1100. In the brush 1110, a pin insertion hole 1112 extending in the vertical direction (shown in FIG. 6) may be formed. A lower portion of the guide pin 1120 may be inserted in the vertical direction into the pin insertion hole 1112 and may extend into the brush 1110.

According to an embodiment, the sensor block 1500 may have a hollow hexahedral shape, e.g., a rectangular parallelepiped shape. A pin through-hole 1550 (shown in FIG. 9A) extending in the vertical direction may be formed in the sensor block 1500 such that the guide pin 1120 passes through the sensor block. The sensor block 1500 may be penetrated and guided by the guide pin 1120 and may be disposed between the body 1100 and the brush 1110.

According to an embodiment, the sensor block 1500 may be provided with two pin through-hole 1550 and may be guided by two guide pins 1120.

According to an embodiment, the vibration sensor 1510 may be installed in the sensor block 1500 to measure vibration transmitted from the brush 1110. The distance sensor 1520 may be installed in the sensor block 1500 to measure a wear amount of the brush 1110. Herein, the wear amount of the brush 1110 may be defined as an amount of change in length of the brush 1110 during a predetermined time.

According to an embodiment, the distance sensor 1520 may operate using a laser output method. An opening hole 1530 (shown in FIG. 8) may be formed in an upper surface of the sensor block 1500. The distance sensor 1520 may be installed on an inner upper surface of the sensor block 1500 and may be disposed at the opening hole 1530.

According to an embodiment, a laser output from the distance sensor 1520 may pass through the opening hole 1530 and reach the upper surface of the body 1100, thereby enabling measurement of a distance between the sensor block 1500 and the body 1100.

As the brush 1110 wears out and its length decreases, the distance between the sensor block 1500 and the body 1100 increases. The controller may calculate the wear amount of the brush 1110 based on a measurement value from the distance sensor 1520.

According to an embodiment, the vibration sensor 1510 may be fixed to an inner lower portion of the sensor block 1500. A lower end of the sensor block 1500 and an upper end of the brush 1110 may be maintained in contact with each other by the roll spring 1140. Accordingly, vibration of the brush 1110 may be directly transmitted to the vibration sensor 1510, thereby improving reliability of vibration measurement.

The controller may be communicatively connected to a manger terminal or an external terminal (e.g., a smartphone or a PC) through a wireless or wired communication. The controller may transmit measurement values of the distance sensor 1520 and the vibration sensor 1510 and the wear amount of the brush 1110 to the manager terminal so that the manager may monitor the state of the brush 1110 in real time.

The manager may monitor the brush 1110 and selectively determine whether to replace the brush 1110 and/or whether to operate the generator based on the monitored information.

According to an embodiment, a connection protrusion 1590 (shown in FIG. 8) may be formed at a lower surface of the sensor block 1500. A support groove 1111 may be formed in an upper surface of the brush 1110 and the connection protrusion 1590 may be inserted into the support groove.

Accordingly, the contact between the sensor block 1500 and the brush 1110 may be more securely maintained through the structure of the connection protrusion 1590 and the support groove 1111. In addition, the vibration of the brush 1110 may be transmitted to the sensor block 1500 with reduced dispersion, thereby further improving reliability of vibration measurement.

The distance sensor 1520 and the vibration sensor 1510 may be electrically connected to the printed circuit board 1410 via the first sensor wire 1521. A block wiring hole 1540 may be formed in the upper surface of the sensor block 1500 to allow the first sensor wire 1521 to pass through the block wiring hole. According to an embodiment, the magnetic field sensor 1230 (shown in FIG. 15), the distance sensor 1520, and the vibration sensor 1510 may be electrically connected to the controller and/or the manager terminal wirelessly rather than through a wired connection.

According to an embodiment, the partition plate 1130 is an element for supporting the roll spring 1140. The partition plate 1130 may be fixed to a side surface of the body 1100 and may be disposed to face a side surface of the brush 1110. The roll spring 1140 may be fixedly disposed between the partition plate 1130 and the sensor block 1500 to lower the sensor block 1500.

As the roll spring 1140 is rolled, the sensor block 1500, the brush 1110, and the collector ring 12 (shown in FIG. 2) may be continuously maintained in sequentially contact with one another by the elastic force of the roll spring 1140.

A spring insertion hole 1570 may be formed in a side surface of the sensor block 1500 so that an upper portion of the roll spring 1140 having a cylindrical shape may be inserted into the spring insertion hole. A spring mounting groove 1580 may be formed in an inner lower surface of the sensor block 1500.

The upper portion of the roll spring 1140 may be seated in the spring mounting groove 1580 and may be retained by the sensor block 1500. The spring mounting groove 1580 may be formed in a semi-circular shape to correspond to an outer circumferential shape of the roll spring 1140.

According to an embodiment, the sensor block 1500 may include two chamber - an upper chamber and a lower chamber. The distance sensor 1520 may be disposed in the upper chamber and the vibration sensor 1510 may be disposed in the lower chamber. The rolled portion of the rolling spring 1140 may be disposed between the upper chamber and the lower chamber. The spring mounting groove 1580 may be formed in an upper support of the lower chamber.

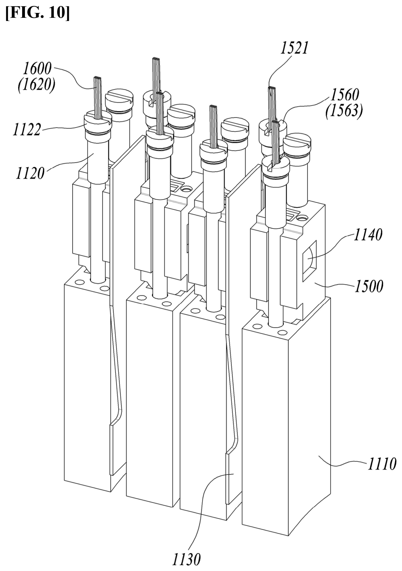

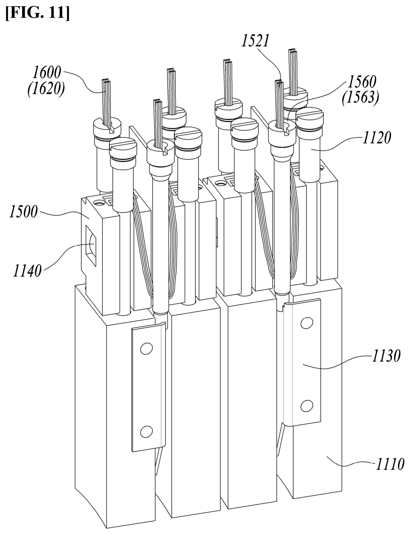

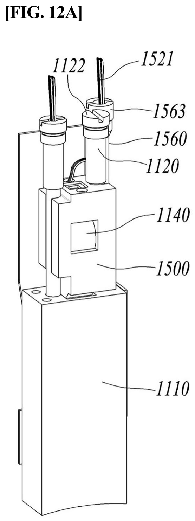

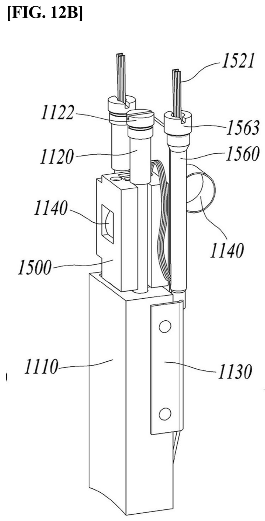

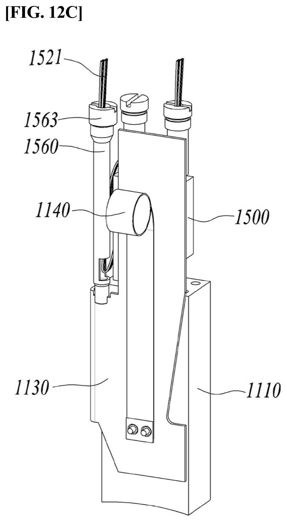

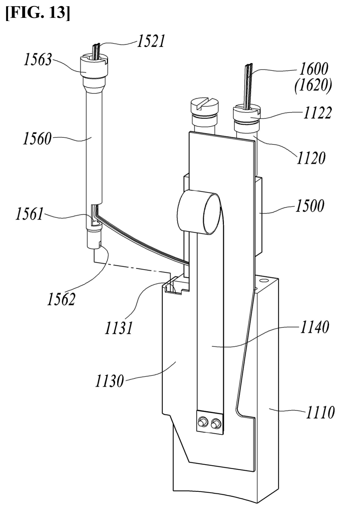

FIG. 10 is a perspective view showing a first side of a plurality of sensor blocks and brushes. FIG. 11 is a perspective view showing a second side of the plurality of sensor blocks and brushes. FIGS. 12A to 12C are perspective views showing a first side surface, a rear surface, and a second side surface of a single sensor block and a single brush. FIG. 13 is a perspective view showing a state in which a wiring duct is separated from the partition plate.

As shown in FIGS. 10 to 13, according to an embodiment, the brush holder 1000 may further include a wiring duct 1560. The wiring duct 1560 is an element for protecting the first sensor wire 1521. The wiring duct 1560 may extend in a vertical direction from an upper end of the partition plate 1130 such that the first sensor wire 1521 passes through the wiring duct 1560.

A wiring-duct-side fixing groove 1562 may be formed at a lower end of the wiring duct 1560. A partition-plate-side fixing groove 1131 may be formed at the upper end of the partition plate 1130 and may engage with the wiring-duct-side fixing groove 1562 to secure the wiring duct 1560 to the partition plate 1130.

A duct wiring hole 1561 may be formed in a circumferential surface of a lower portion of the wiring duct 1560 so that the first sensor wire 1521 coming out of the sensor block 1500 may pass through the wiring duct 1560 through the duct wiring hole 1561. A wiring duct cap 1563 may be fitted onto an upper end of the wiring duct 1560 so that the wiring duct 1560 may be kept airtight.

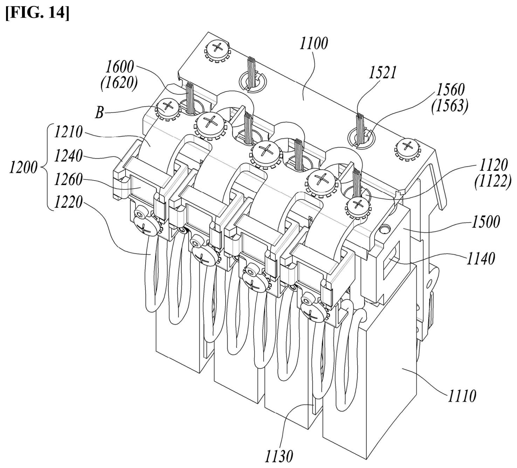

FIG. 14 is a perspective view of the body. FIG. 15 is a perspective view showing a state in which a housing cover is separated from a sensor housing.

As shown in FIGS. 3 to 5, 14, and 15, according to an embodiment, the brush holder 1000 may further include a connection part 1200, a magnetic field sensor 1230, and a body cover 1300. The connection part 1200 may be disposed between the body 1100 and the brush 1110 to transfer current from the body 1100 to the brush 1110.

According to an embodiment, the magnetic field sensor 1230 may be installed at the connection part 1200 to measure a magnetic field generated by the connection part 1200, more specifically, a terminal bar 1210, which will be described later. The controller may calculate an amount of current flowing through the brush 1110 based on a measurement value of the magnetic field sensor 1230. A known algorithm for calculating the amount of current from the magnetic field may be stored in the controller.

Accordingly, the amount of current may be precisely measured for each brush 1110, thereby reducing an error range in the current measurement. In addition, the amount of current may be measured without a manager directly touching the brush 1110, thereby reducing a risk of an electric shock accident.

According to an embodiment, the controller may transmit the calculated amount of current to the manager's terminal so that the manager may monitor the state of the brush 1110 in real time. The manager may monitor the brush 1110, and when a particular brush exceeds a predetermined temperature range, selectively determine whether to replace the brush and/or whether to operate the generator.

According to an embodiment, the connection part 1200 may include the terminal bar 1210, and an electric wire 1220. The terminal bar 1210 and the electric wire 1220 may be provided for each brush 1110. An upper end of the terminal bar 1210 may be fixed to the upper surface of the body 1100. The magnetic field sensor 1230 may be disposed on and fixed to a side surface of the terminal bar 1210. The electric wire 1220 may be connected between a lower end of the terminal bar 1210 and the upper end of the brush 1110.

According to an embodiment, the body cover 1300 may include an upper portion cover 1310 and a lower portion cover 1320. The upper portion cover 1310 may be fixed to the controller housing 1400 to cover and protect the controller housing 1400 and the terminal bar 1210. The lower portion cover 1320 may be fixed to the body 1100 to cover and protect the electric wire 1220 and a side surface of the brush 1110.

According to an embodiment, at a side surface of the body cover 1300, a plurality of partition walls 1321 (shown in FIG. 5) may be formed spaced apart from each other. The electric wire 1220 may be disposed between the adjacent partition walls 1321. That is, the electric wires 1220 for the respective brushes 1110 may be separated by the partition walls 1321 so that overcurrent due to contact between the adjacent electric wires 1220 may be prevented from flowing through the brushes 1110.

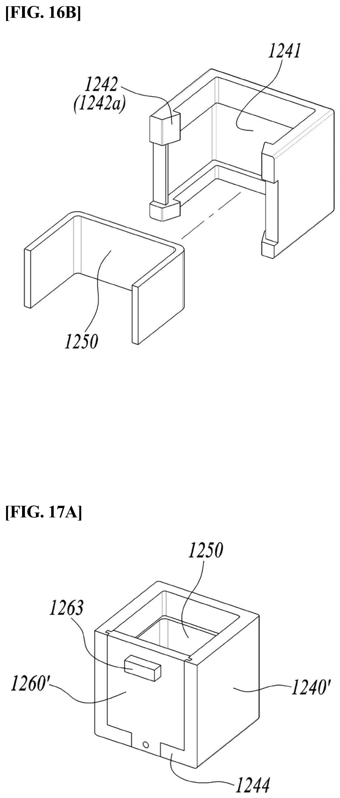

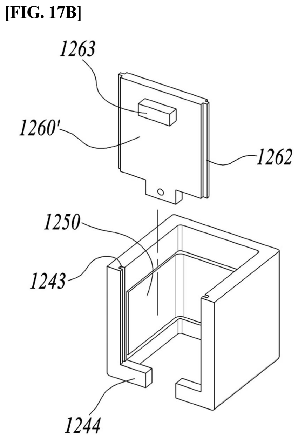

FIGS. 16A and 16B are perspective views showing a first embodiment of the sensor housing and a state in which a shielding plate is separated from the sensor housing. FIGS. 17A and 17B are perspective views showing a second embodiment of the sensor housing and a state in which the housing cover is separated from the sensor housing.

According to an embodiment, as shown in FIGS. 15, 16A, and 16B, the brush holder 1000 may further include a sensor housing 1240, a shielding plate 1250, and a housing cover 1260. The sensor housing 1240 may be formed in a hollow hexahedron, and specifically, may be formed in a "C"-shape in which an upper surface, a lower surface, and a first side surface of the hollow hexahedron are open. The sensor housing 1240 may be installed on the terminal bar 1210 such that the magnetic field sensor 1230 may be disposed inside the sensor housing 1240.

According to an embodiment, the sensor housing 1240 may be penetrated by the terminal bar 1210 in the vertical direction. The shielding plate 1250 may be installed at an inner side surface of the sensor housing 1240. As described above, since the plurality of brushes 1110 are arranged in a line on the body 1100, magnetic interference from adjacent terminal bars 1210 may occur.

Such magnetic interference may cause errors in magnetic field measurement. Accordingly, the shielding plate 1250 may block ambient magnetic field, thereby improving reliability of magnetic field measurement.

According to an embodiment, the shielding plate 1250 may be formed in a "C"-shaped configuration corresponding to the sensor housing 1240. The shielding plate 1250 may be disposed along the inner circumferential surface of the sensor housing 1240 to surround the terminal bar 1210.

According to an embodiment, a plate insertion groove 1241 may be formed on the inner side surface of the sensor housing 1240 so that the shielding plate 1250 may be inserted into the plate insertion groove. That is, as the shielding plate 1250 is inserted into the plate insertion groove 1241, an inner space for accommodating the terminal bar 1210, the magnetic field sensor 1230, and the housing cover 1260 may be secured. In addition, the sensor housing 1240 may be formed in a more compact configuration.

According to an embodiment, the housing cover 1260 may be formed in a plate shape. The housing cover 1260 may be selectively coupled to or separated from the sensor housing 1240 to open and close the sensor housing 1240. The housing cover 1260 may be coupled to opposite side ends of the sensor housing 1240 and may be disposed to face the magnetic field sensor 1230. The housing cover 1260 may also be fixed to the terminal bar 1210.

In the first embodiment, the sensor housing 1240 may be coupled to the housing cover 1260 using a hook structure. Hook protrusions 1242 may be formed at the opposite side ends of the sensor housing 1240 to be coupled to the housing cover 1260. At the hook protrusion 1242, an inclined surface 1242a may be formed in a coupling direction of the housing cover 1260.

Opposite side ends of the housing cover 1260 contact the inclined surfaces 1242a and may move along the inclined surfaces 1242a into the sensor housing 1240. The opposite side ends of the sensor housing 1240 may be elastically deformed outward by the housing cover 1260.

In addition, when the opposite side ends of the housing cover 1260 pass over the hook protrusions 1242, the force applied to the housing cover 1260 may be released, allowing the housing cover 1260 to elastically return to its original shape, with its side ends engaged by the hook protrusions 1242.

According to an embodiment, handle protrusions 1261 may be formed at the opposite side ends of the housing cover 1260. The handle protrusions 1261 may engage the opposite side ends of the sensor housing 1240. When the manager grips and pressurizes both handle protrusions 1261, the housing cover 1260 may elastically deform, thereby disengaging from the hook protrusions 1242 and allowing removal of the housing 1260.

As shown in FIGS. 15, 17A, and 17B, in the second embodiment, a sensor housing 1240' may be coupled to a housing cover 1260' in a sliding manner.

Slide grooves 1243 extending in the vertical direction may be formed at opposite side ends of the sensor housing 1240'. Coupling protrusions 1262 may be formed in an upward-downward direction at opposite side ends of the housing cover 1260' and may be inserted into the slide grooves 1243. The housing cover 1260' may be fixed to the terminal bar 1210.

A handle protrusion 1263 may be formed on a side surface of the housing cover 1260'. The manager may grip the handle protrusion 1263 to facilitate coupling or separation of the housing cover 1260' relative to the sensor housing 1240'.

According to an embodiment, support protrusions 1244 may be formed at lower portions of the opposite side ends of the sensor housing 1240' and may be in contact with a lower end of the housing cover 1260. The housing cover 1260 may be stably supported by contact with the support protrusions 1244.

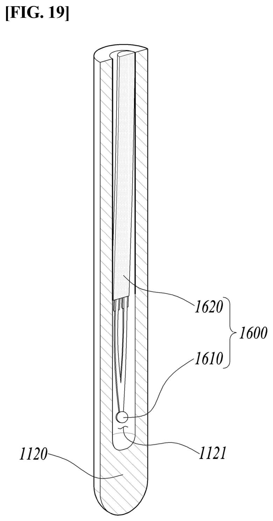

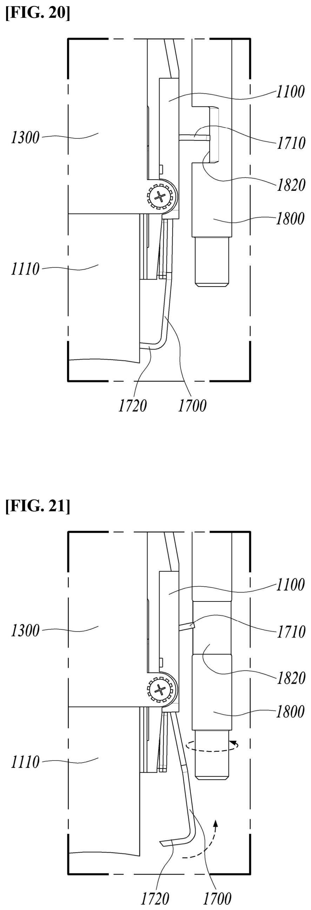

FIG. 18 is a sectional view taken along line A-A shown in FIG. 3. FIG. 19 is an enlarged view of portion A shown in FIG. 18. FIG. 20 is a side view showing a state in which the brush is fixed to a hook member. FIG. 21 is a side view showing a state in which the brush is separated from the hook member.

As shown in FIGS. 18 to 21, according to an embodiment, the brush holder may further include a temperature sensor 1600. A thermocouple may be used as the temperature sensor 1600. A junction 1610 may be formed at a lower end of the thermocouple to measure the temperature of the brush 1110. The junction 1610 may be electrically connected to the printed circuit board 1410 via the second sensor wire 1620.

The temperature sensor 1600 may be installed at the guide pin 1120. A hollow portion 1121 extending in the vertical direction may be formed inside the guide pin 1120. The temperature sensor 1600 may be disposed within the hollow portion 1121. According to an embodiment, the lower end of the hollow portion 1121 may be closed.

Accordingly, the junction 1610 is disposed inside the brush 1110 to directly measure the temperature of the brush 1110, thereby improving the reliability of temperature measurement. The controller may transmit a measurement value of the temperature sensor 1600 to the terminal or an external terminal so that the manager may monitor the state of the brush 1110 in real time.

The manager may monitor the brush 1110 and selectively determine whether to replace the brush 1110 and/or whether to operate a generator based on the monitored information. A guide pin cap 1122 may be fitted onto the upper end of the guide pin 1120 to maintain airtightness of the guide pin 1120.

The brush holder may further include a hook member 1700, a fixing rod 1800, and a handle 1810. The hook member 1700 may be formed in a plate shape. The hook member 1700 may be fixed to a side surface of the body 1100. The fixing rod 1800 may extend and penetrate through the controller housing 1400 in the vertical direction.

The fixing rod 1800 may selectively press the hook member 1700 to fix the hook member 1700 to the brush 1110 or separate the hook member from the brush. The handle 1810 may be formed in a plate or block shape. The handle 1810 may be fixed to an upper end of the fixing rod 1800 to facilitate rotation of the fixing rod 1800.

A pressing protrusion 1710 may be formed at an upper end of the hook member 1700 and may extend toward the fixing rod 1800. At a lower end of the hook member 1700, a claw 1720 may be formed and extend toward the brush 1110. A protrusion insertion groove 1820 may be formed in an outer circumferential surface of the fixing rod 1800 so that the pressing protrusion 1710 may be selectively inserted into the protrusion insertion groove.

When the fixing rod 1800 rotates in a first direction (e.g., forward direction), the pressing protrusion 1710 may be withdrawn from the protrusion insertion groove 1820 and the fixing rod 1800 may press the pressing protrusion 1710 such that the claw 1720 is separated from a side surface of the brush 1110. When the fixing rod 1800 rotates in a second (i.e., opposite) direction (e.g., backward direction), the pressing protrusion 1710 may be guided into the protrusion insertion groove 1820 and the claw 1720 may return to its original position and engage the side surface of the brush 1110.

Accordingly, the brush 1110 may be fixed to the hook member 1700 to prevent unintentionally separation of the brush 1110 from the body 1100. The manager may thereby transport the brush holder 1000 in a stable state while the brush 1110 is fixed to the body 1100, when coupling the brush holder to the busbar 13 (shown in FIG. 2) or separating the brush holder 1000 from the busbar 13.

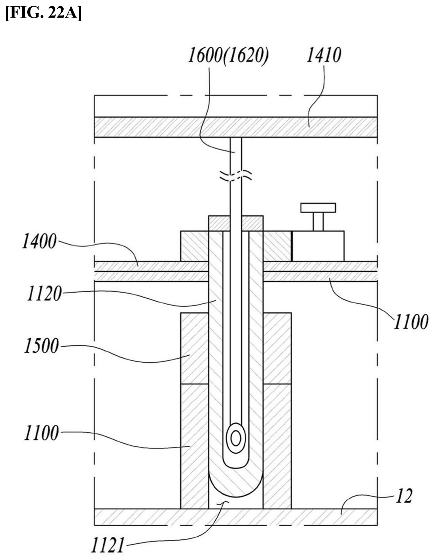

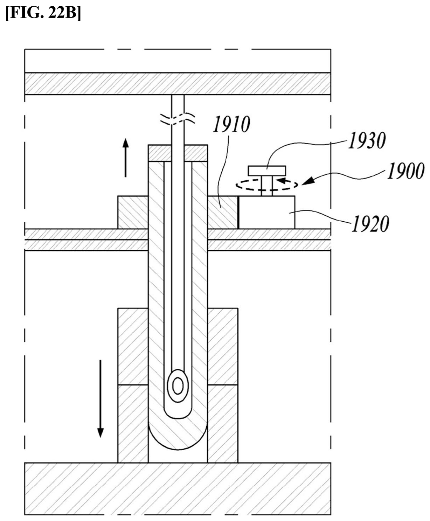

FIGS. 22A and 22B are schematic cross-sectional views showing an elevating part in the brush holder according to a second embodiment of the present disclosure and a state in which the guide pin is raised.

The brush holder according to the second embodiment of the present disclosure may have substantially the same structure as the brush holder according to the first embodiment except for an elevating part 1900. Accordingly, redundant descriptions of the same elements will be omitted.

As shown in FIGS. 22A and 22B, the brush holder may further include the elevating part 1900. The elevating part 1900 may selectively raise or lower the guide pin 1120. In this embodiment, unlike the above-described first embodiment, an upper portion of the guide pin 1120 may extend through the upper surface of the body 1100 and the lower surface of the controller housing 1400.

As the brush 1110 wears and its length decreases, the distance between the collector ring 12 and the guide pin 1120 may also decrease. If this condition continues, the lower end of the guide pin 1120 may come into contact with the collector ring 12, which may result in component damage and an increased risk a fire. Meanwhile, as the distance between the lower end of the guide pin 1120 and the collector ring 12 becomes shorter, the frictional heat generated between the brush 1110 and the collector ring 12 may be measured more accurately.

The controller may drive the elevating part 1900 based on a measurement value of the distance sensor to selectively raise or lower the guide pin 1120. Accordingly, the distance between the lower end of the guide pin 1120 and the collector ring 12 may be maintained at a predetermined minimum value, thereby reducing the possibility of component damage and improving reliability of temperature measurement.

According to an embodiment, the elevating part 1900 may include a coupling ring 1910, a gear 1920, and a motor 1930. The upper portion of the guide pin 1120 may be disposed inside the controller housing 1400. The coupling ring 1910 may also be disposed inside the controller housing 1400 and may be rotatably supported therein.

According to an embodiment, screw threads may be formed at an outer circumferential surface and an inner circumferential surface of the coupling ring 1910. The guide pin 1120 may extend through the coupling ring 1910 and may be screw-coupled to the coupling ring 1910.

The gear 1920 may be engaged with teeth formed on the outer circumferential surface of the coupling ring 1910. An electric motor may be used as the motor 1930. A rotation shaft of the motor 1930 may be fixed to the gear 1920 to rotate the gear 1920.

Accordingly, the rotational force of the motor 1930 may be converted into a linear motion by the threaded engagement between the coupling ring 1910, thereby raising or lowering the guide pin 1120.

Although an embodiment of the present disclosure has been described above, those skilled in the art will understand that various modifications and changes may be made to the present disclosure by adding, changing, deleting, or supplementing elements without departing from the idea of the present disclosure as set forth in the claims, and such modifications and changes are also included within the scope of the present disclosure.

## Claims

1. A brush holder, comprising:
a body having a lower side, the lower side being configured to mount a brush;
a guide pin having an upper portion installed at the body and a lower portion operable to be inserted into the brush;
a sensor block penetrated by the guide pin and disposed between the body and the brush; and
a vibration sensor installed in the sensor block to measure a vibration transmitted from the brush.

2. The brush holder of claim 1, further comprising:
a distance sensor installed in the sensor block to measure a distance between the sensor block and the body.

3. The brush holder of claim 2, further comprising:
a controller configured to calculate a wear amount of the brush based on a measurement value of the distance sensor.

4. The brush holder of claim 3, wherein the controller is configured to transmit, to an external terminal, at least one of a measurement value of the vibration sensor, the measurement value of the distance sensor, and the wear amount.

5. The brush holder of claim 2 or 3, wherein an opening hole is formed in an upper surface of the sensor block, and
the distance sensor is installed at an inner upper portion of the sensor block and is disposed in the opening hole.

6. The brush holder according to any one of the preceding claims, wherein the vibration sensor is installed at an inner lower portion of the sensor block.

7. The brush holder according to any one of the preceding claims, wherein a block wiring hole is formed in an upper portion of the sensor block and a sensor wire connected to the distance sensor or the vibration sensor passes through the block wiring hole.

8. The brush holder according to any one of the preceding claims, wherein a pin through-hole is formed in a vertical direction in the sensor block and the sensor block is penetrated by the guide pin.

9. The brush holder according to any one of the preceding claims, further comprising:
a partition plate installed at the body and configured to be disposed at a side surface of the brush; and
a roll spring installed between the partition plate and the sensor block to lower the sensor block.

10. The brush holder of claim 9 in combination with claim 7, further comprising:
a wiring duct coupled to an upper portion of the partition plate and the sensor wire passes through the wiring duct.

11. The brush holder of claim 9 or 10, wherein a spring insertion hole is formed in a side surface of the sensor block and an upper portion of the roll spring is inserted into the spring insertion hole.

12. The brush holder of claim 9 or 10, wherein a spring mounting groove is formed in an inner lower portion of the sensor block and an upper portion of the roll spring is deposited in the spring mounting groove.

13. The brush holder of claim 12,
wherein the sensor block includes two chambers, which are an upper chamber and a lower chamber,
the distance sensor is disposed in the upper chamber and the vibration sensor is disposed in the lower chamber,
the upper portion of the roll spring is a rolled portion of the roll spring and is disposed between the upper chamber and the lower chamber,
the spring mounting groove is formed in an upper surface of the lower chamber.

14. The brush holder according to any one of the preceding claims, wherein a connection protrusion is formed at a lower surface of the sensor block, and
the connection protrusion is configured to be inserted into an support groove formed in an upper surface of the brush.

15. A brush holder rigging, comprising:
a rotor of a generator;
a collector ring penetrated by the rotor and fixed to the rotor;
a busbar penetrated by the collector ring;
a brush in contact with the collector ring; and
a brush holder according to any one of the preceding claims, the brush holder coupled to the busbar.
